# FASCICULE DE BREVET EUROPEEN

(11) **EP 1 316 490 B1**
(45) Date de publication et mention de la délivrance du brevet: **15.03.2006**
(21) Numéro de dépôt: 02025477.7
(22) Date de dépôt: 15.11.2002
(51) Int. Cl.: B62D 1/00, B62D 1/04, B62D 1/22, B62D 5/00, B62D 7/15

(54) **Direction électrique pour véhicules**
Elektrische Lenkung für Fahrzeuge
Electric steering for vehicles

(30) Priorité: 23.11.2001 FR 0115222; 03.05.2002 FR 0205662
(43) Date de publication de la demande: 04.06.2003
(73) Titulaire: Conception et Développement Michelin S.A., 1762 Givisiez (CH)
(72) Inventeur: Laurent, Daniel, CH-1723 Marly (CH)
(74) Mandataire: Bauvir, Jacques

(56) Documents cités:
- WO-A-01/70556
- WO-A-95/30569
- DE-A- 3 124 181
- DE-A- 4 404 594
- US-A- 2 203 810
- US-A- 3 198 541
- US-A- 5 348 111
- US-A- 5 492 348

## Description

La présente invention se rapporte à la commande de changement de trajectoire d'un véhicule automobile.

Dans l'état actuel de la technique, la commande de direction d'un véhicule automobile de tourisme se fait la plupart du temps au moyen d'un volant. Le conducteur agit par rotation sur le volant dans un sens ou dans l'autre pour orienter le véhicule dans une direction ou dans une autre. De cette façon, le conducteur confère un mouvement de lacet au véhicule. Par ailleurs, il se développe de plus en plus des moyens de commande électrique pour l'ensemble des actionneurs d'un véhicule automobile, et notamment la direction. Cette technologie est connue sous l'appellation anglo-saxonne « steer by wire ».

La technologie de commande d'actionneurs par liaison électrique consiste à remplacer par des liaisons électriques les liaisons à l'heure actuelle en général hydrauliques ou mécaniques entre la commande et les actionneurs. Ainsi par exemple, en ce qui concerne la direction des véhicules automobiles, on va substituer au système mécanique, assisté ou non, existant entre le volant et les roues directrices, la chaîne suivante. La commande de direction à la disposition du conducteur du véhicule peut être un volant traditionnel ou une manette du genre manche à balais. Au niveau des roues, il existe un actionneur électrique, de préférence individuel roue par roue. Les ordres imprimés par le conducteur du véhicule sur son moyen de commande sont envoyés aux actionneurs par une liaison électrique, l'ensemble étant placé sous le contrôle d'un contrôleur de trajectoire chargé de programmes adéquats afin de pouvoir piloter les actionneurs de façon appropriée.

L'avantage de cette technologie est qu'elle se marie de façon idéale avec les progrès de l'électronique, qui permettent des asservissements de plus en plus sophistiqués et qui permettent de placer le braquage des roues non seulement sous le contrôle de la commande manuelle mais aussi sous le contrôle d'un système de sécurité. Ainsi par exemple, on peut imprimer aux roues directrices un angle qui tient non seulement compte de la commande du conducteur du véhicule, mais qui tient également compte de paramètres dynamiques observés sur le véhicule.

Lorsqu'un conducteur souhaite changer la trajectoire de son véhicule, cela peut répondre à deux besoins de nature assez différente. Le premier besoin est de prendre un virage et, dans ce cas, il est nécessaire d'imprimer une accélération de lacet au véhicule, suivie d'une phase où la vitesse de lacet varie peu, puis une décélération de lacet en sortie de virage, afin d'obtenir une direction de déplacement différente après la manoeuvre par rapport à ce qu'elle était avant la manoeuvre. Lorsqu'il s'agit de dépasser un véhicule sur une route ou une autoroute, on sait que le conducteur agit sur le volant pour imposer un léger virage à gauche pour les pays dans lesquels on circule à droite, puis immédiatement après un léger virage à droite lorsque le véhicule s'est déplacé transversalement de façon suffisante ; enfin, lorsque la manoeuvre de dépassement s'achève, à nouveau un léger virage pour de nouveau changer l'orientation du véhicule afin de se rapprocher de la bande de circulation initiale, et enfin un quatrième léger virage. On constate donc que, pour pouvoir effectuer une manoeuvre de dépassement, il est nécessaire d'imposer deux accélérations transversales au véhicule au moyen de quatre accélérations de lacets. Or en fait, seules les accélérations transversales sont utiles en manoeuvre de dépassement en ligne droite.

La présente invention a donc pour objectif de proposer un système électrique pour agir sur la trajectoire d'un véhicule dont toutes les roues sont directrices, l'angle de braquage étant imposé individuellement et sélectivement sur chacune des roues directrices par un actionneur électrique dédié, ledit système électrique comportant un organe de commande pour agir sur la trajectoire du véhicule, ledit organe de commande étant à la disposition du conducteur, comportant un contrôleur de trajectoire déterminant pour chacune des roues directrices un angle de braquage de roue en fonction au moins d'un signal délivré par l'organe de commande de trajectoire du véhicule et en fonction d'au moins un signal représentatif de la trajectoire effective du véhicule. Le contrôleur de trajectoire est programmé de façon à assurer la cohérence entre la trajectoire désirée par le conducteur, par ses actions sur l'organe de commande, et la trajectoire effective telle qu'elle peut être observée par des capteurs adéquats (citons par exemple un capteur de vitesse longitudinale, un capteur d'accélération transversale, un capteur de lacet)..

La présente invention a aussi pour objectif, indépendamment de l'objectif précédent, de mettre à la disposition du conducteur du véhicule une commande spécifique, permettant de provoquer une translation transversale du véhicule à cap constant, cette commande étant indépendante de la commande de changement de direction du véhicule, c'est à dire indépendante de la commande de lacet (changement de cap). Le brevet US 5,492,348 propose une commande de direction offrant quatre modes différents pour le braquage. La demande de brevet DE 44 04 594 propose un organe de commande de type joystick pouvant agir sur le braquage et sur le déplacement transversal séparément mais ce type de commande est très différent d'un volant.

L'objectif poursuivi est de proposer une commande qui soit aussi peu déroutante que possible pour un conducteur déjà habitué à utiliser un volant pour agir sur la trajectoire de son véhicule, tout en apportant un potentiel de progrès.

C'est pourquoi la présente invention conserve l'utilisation d'un premier organe du genre « volant » pour imprimer des changements de direction au véhicule. Pour rappel, un changement de direction correspond à un changement de cap. Les commandes de changement de direction du véhicule se font de façon conventionnelle, c'est-à-dire en imprimant une rotation à ce premier organe. Afin de découpler la commande de translation transversale du véhicule à cap constant de la commande de changement de direction du véhicule (changement de cap), la présente invention propose d'équiper le dispositif de commande d'un second organe spécifique pour imprimer au véhicule un déplacement transversal à cap constant (c'est à dire sans lacet).

Dès lors, l'invention porte également sur un dispositif de commande à la disposition du conducteur pour agir sur la trajectoire d'un véhicule dont toutes les roues sont directrices, par une double commande agissant séparément sur la mise en lacet et sur le déplacement transversal pur, la transmission des ordres de déplacement se faisant par voie électrique, le dispositif comprenant un premier organe de commande pour imprimer un mouvement de lacet au véhicule, le premier organe comportant essentiellement un arbre rotatif solidaire de deux poignées disposées à une certaine distance de l'arbre rotatif, ledit arbre rotatif étant pourvu d'au moins un capteur ... d'angle de rotation et d'un moyen de rappel en position ligne droite, et comportant un second organe pour imprimer au véhicule un déplacement transversal sans lacet.

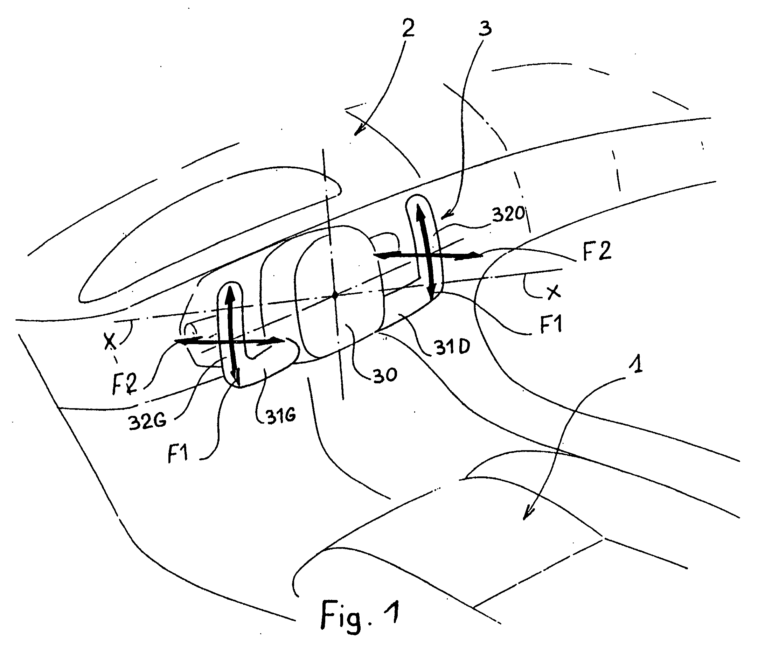

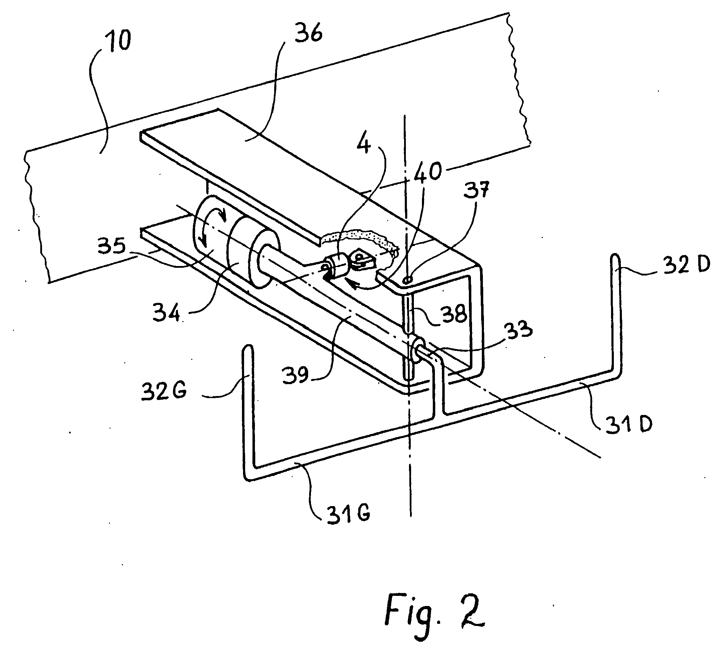

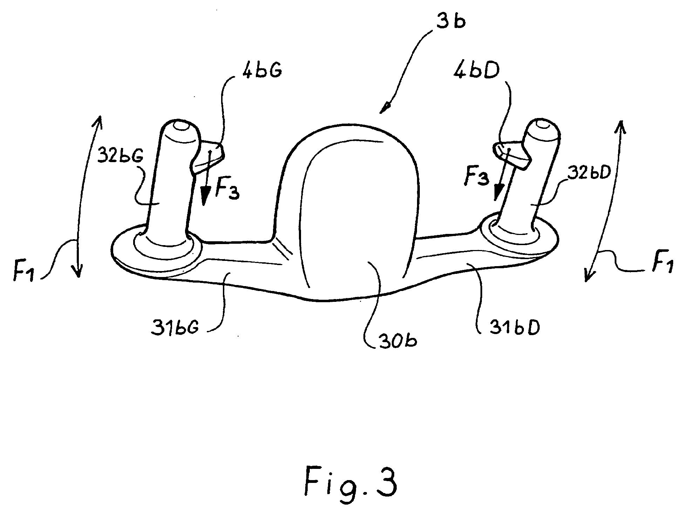

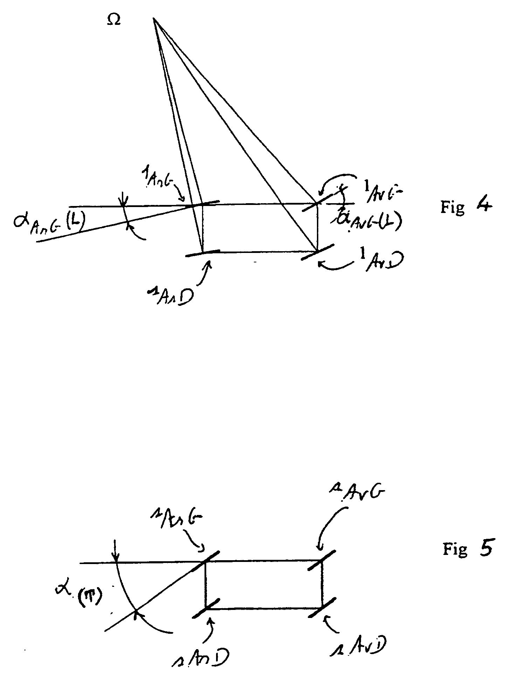

L'invention est décrite plus en détail au moyen des figures suivantes, sur lesquels :
■ la figure 1 montre un dispositif de commande installé dans l'habitacle d'un véhicule ;
■ la figure 2 est un schéma montrant plus en détails l'agencement d'un mode de réalisation du dispositif de commande ;
■ la figure 3 montre une variante de réalisation d'un dispositif de commande installé dans l'habitacle d'un véhicule ;
■ la figure 4 est un schéma illustrant un changement de trajectoire avec mouvement de lacet ;
■ la figure 5 est un schéma illustrant un changement de trajectoire à cap constant.

A la figure 1, on voit un siège conducteur 1, un tableau de bord 2 et le dispositif de commande de la trajectoire 3 proposé par l'invention. On voit une partie centrale 30 reliée à un arbre 33 (voir figure 2), la partie centrale 30 pouvant contenir un sac gonflable comme les volants de direction usuels. De part et d'autre de cette partie centrale 30 et reliées à celle-ci, on voit deux branches 31G et 31D, prolongées par deux poignées 32G et 32D, disposées à une certaine distance de l'arbre rotatif 33 et de préférence de façon sensiblement symétrique par rapport à celui-ci.

A la figure 2, on voit que l'arbre rotatif 33 est pourvue d'au moins un capteur 34 d'angle de rotation et d'un moyen de rappel 35 en position ligne droite. Un caisson 36 appartenant à la structure rigide 10 du véhicule se termine par une embase 37, l'embase formant paliers pour un axe 38 monté rotatif sur les extrémités de l'embase 37. Cet axe 38 est par ailleurs solidaire de l'arbre d'un fourreau 39 à l'intérieur duquel est monté l'arbre rotatif 33, à rotation libre par rapport au fourreau 39. Enfin, une biellette 4 équipée d'un capteur 40 d'effort d'extension/compression relie le fourreau 39 au caisson 36.

Pour prendre un virage, l'action du conducteur est identique à ce qu'il ferait avec un véhicule de tourisme existant de nos jours. Il fait tourner les poignées 32G et 32D dans le sens des aiguilles d'une montre pour tourner à droite, et dans le sens inverse des aiguilles d'une montre pour tourner à gauche, comme schématisé par les flèches F1 à la figure 1. La rotation possible est d'angle limité à une valeur très inférieure à +90° ou -90°. La rotation couvre par exemple la gamme allant de -30° à +30° Les poignées 32G et 32D constituent essentiellement le premier organe de commande. Les poignées 32G et 32D constituent un levier d'action fort comparable à un volant traditionnel auquel le conducteur imprime une variation d'angle correspondant à une demande de variation de la vitesse de lacet.

Le dispositif de commande à la disposition du conducteur comporte un second organe permettant d'agir sur la trajectoire du véhicule, grâce auquel il peut exprimer une demande de déplacement transversal à cap constant.

Dans une première variante de réalisation, ce second organe comporte au moins un capteur d'effort agencé pour détecter une sollicitation tendant à peser sur lesdites poignées autour d'un axe de basculement sensiblement perpendiculaire à l'arbre rotatif, ledit axe de basculement étant de préférence sensiblement compris dans le plan de symétrie du premier organe. Dans ce cas, l'arbre 33 est disposé plutôt horizontalement, c'est à dire comme la colonne de direction des véhicules de tourisme courants.

Le conducteur impose aux poignées 32G et 32D un effort de basculement comme schématisé par les flèches F2 à la figure 1, par exemple un effort tendant à éloigner la poignée 32G pour déplacer transversalement le véhicule vers la gauche tout en maintenant son orientation longitudinale inchangée, et un effort tendant à éloigner la poignée 32D pour déplacer transversalement le véhicule vers la droite tout en maintenant son orientation longitudinale inchangée. Selon une première possibilité, cet effort ne provoque aucun déplacement, mais il y a de préférence un seuil minimal à dépasser avant de modifier la trajectoire. Cet effort est mesuré par le capteur 40. Il y a d'autres possibilités de mise en oeuvre. On peut par exemple configurer la commande pour qu'il y ait un léger déplacement, notamment au delà d'un certain seuil pendant que la commande est active.

Dans une deuxième variante de réalisation, le second organe permettant d'agir sur la trajectoire du véhicule comporte au moins une gâchette sensitive, par exemple une sur chaque poignée, actionnant l'une le déplacement transversal à cap constant dans un sens et l'autre le déplacement transversal à cap constant dans l'autre sens, en fonction de l'amplitude de la pression exercée sur la gâchette. Dans cette variante, il n'y a pas de raison particulière dictant que l'orientation de l'arbre 33 soit plutôt horizontale, contrairement à ce qui a été indiqué ci-dessus.

A la figure 3, on voit un exemple de réalisation d'une commande de la trajectoire 3b conforme à cette deuxième variante de réalisation de l'invention'. Plusieurs parties sont très similaires à ce que l'on trouve dans la première variante de réalisation, à savoir une partie centrale 30b, deux branches 31bG et 31bD, prolongées par deux poignées 32bG et 32bD. Sur chacune des poignées 32bG et 32bD, on voit une gâchette 4bG et respectivement 4bD disposées à un emplacement choisi pour être facilement actionnable volontairement par le pouce, sans risquer d'être actionnée involontairement par exemple lors d'une rotation de la commande 3b.

Pour prendre un virage, l'action du conducteur est identique à ce qui a été expliqué ci-dessus. Pour obtenir un déplacement transversal à cap constant, le conducteur agit sur l'une ou l'autre des gâchettes 4bG ou 4bD. Par exemple, pour déplacer transversalement le véhicule vers la gauche, il appuie sur la gâchette 4bG, alors que pour déplacer transversalement le véhicule vers la droite, il appuie sur la gâchette 4bD. Cette action sur l'une ou l'autre des gâchettes 4bG ou 4bD peut bien entendu être combinée avec une rotation de la commande 3b pour combiner un certain degré de déplacement transversal et une demande de changement de cap.

Dans le cas d'une translation transversale à cap constant, la commande imprimé par le conducteur (flèches F2 à la figure 1 ou action F3 sur l'une des touches 4bG ou 4bD à la figure 3) est traduite de façon à ce que toutes les roues du véhicule braquent dans la même direction et du même angle. Plus généralement, en cas de demande de translation transversale sans demande de changement de cap, que le véhicule soit en train d'opérer un changement de cap ou non, la variation d'angle de braquage est identique sur toutes les roues du véhicule. Dès lors, la commande imprimé par le conducteur (flèches F2 à la figure 1 ou action F3 sur l'une des touches 4bG ou 4bD à la figure 3) est traduite de façon à ce que toutes les roues du véhicule braquent dans la même direction et du même angle (ou, plus généralement, de façon à ce que la variation d'angle de braquage soit identique sur toutes les roues). De cette façon, on évite d'imposer au véhicule des accélérations de lacet inutiles pour la manoeuvre et d'autant plus préjudiciables que l'inertie de lacet du véhicule est importante. Il en résulte une réduction de l'usure des pneus. Un véhicule ainsi équipé passe bien plus facilement le test dit « de l'élan ». C'est l'avantage apporté par la double commande agissant séparément sur la mise en lacet et sur le déplacement transversal pur.

Les ordres imprimés par le conducteur du véhicule sur son moyen de commande, aussi bien la rotation schématisée par les flèches F1 que la commande schématisé par les flèches F2 ou F3, sont envoyés à un contrôleur de trajectoire (non représenté) chargé de programmes adéquats afin de pouvoir piloter les actionneurs électriques au niveau des roues directrices, de préférence individuellement roue par roue. De préférence, la démultiplication entre la rotation des poignées 32G et 32D (commande selon les flèches F1) et le braquage des roues est variable en fonction de la vitesse de déplacement longitudinale du véhicule, ce que le contrôleur de trajectoire peut aisément prendre en compte.

Bien entendu, afin de pouvoir effectuer un déplacement transversal sans lacet, c'est à dire sans changement de cap (commande schématisée par les flèches F2 ou F3), il convient que toutes les roues du véhicule soient directrices, afin de pouvoir les braquer toutes du même angle, aux dérives des pneus près. A titre purement illustratif, soulignons que la technologie décrite dans la demande de brevet EP 0 878 332 et la demande de brevet EP 0 878 378 se prête aisément à construire un véhicule dont toutes les roues sont directrices. Plus généralement, afin de pouvoir mettre en oeuvre l'invention, le pré-requis est d'installer au moins un actionneur pour braquer les roues sur chaque essieu. Chaque essieu peut comporter une liaison mécanique entre roues directrices, du genre crémaillère de direction, et le coulissement de celle-ci est contrôlé par un seul actionneur électrique.

Dans une mise en oeuvre plus sophistiquée de la présente invention, on peut aussi installer un actionneur électrique sur chaque roue pour commander l'angle de braquage individuellement sur chaque roue, la cohérence des braquages individuels en fonction de la trajectoire souhaitée pour le véhicule étant alors assurée par ledit contrôleur de trajectoire.

Bien entendu, aux ordres imprimés par le conducteur du véhicule sur son moyen de commande, le contrôleur de trajectoire peut superposer des éventuels correctifs déterminés par une fonction de contrôle de la trajectoire comme celle procurée par un système ESP, et/ou comme celle résultant d'un dialogue avec un moyen de contrôle de trafic extérieur au véhicule et/ou un dialogue avec un moyen de localisation du véhicule de type GPS. Le correcteur de trajectoire détermine l'angle de braquage pour chacune des roues en conséquence. Dans ces cas, l'angle de braquage de chaque roue comporte une composante résultant des ordres imprimés par le conducteur du véhicule sur son moyen de commande et une composante de correction.

En déplacement à vitesse soutenue, le pilote exprime des demandes de changement de trajectoire avec ou sans variation de la vitesse de lacet, les deux pouvant bien entendu être combinés par exemple pour un dépassement dans un virage.

Il est important de pouvoir tenir compte de l'éducation des conducteurs de véhicules automobiles. La présente invention permet d'offrir une latitude de commande des trajectoires supplémentaire tout en maintenant le moyen usuel de commander le changement de direction du véhicule. Ainsi, le conducteur non habitué à cette commande supplémentaire pourra très bien ne pas s'en servir et agir seulement en imprimant des rotations au volant. De plus, on peut s'habituer progressivement à cette commande supplémentaire.

Dans un système électrique pour agir sur la trajectoire d'un véhicule à roues directrices multiples, de préférence, il y a un actionneur pour chaque roue directrice. Un contrôleur permet d'imposer sélectivement un angle de braquage approprié à chacune des roues directrices en fonction au moins de la localisation de ladite roue directrice sur le véhicule, de la vitesse du véhicule et du changement de trajectoire demandé.

La figure 4 illustre le cas d'un mouvement de lacet à une vitesse soutenue. On repère sur le véhicule la localisation des diverses roues directrices : roue directrice avant gauche 1AvG, roue directrice avant droite 1AvD, roue directrice arrière gauche 1ArG et roue directrice arrière droite 1ArD. On sait que pour maintenir une bonne stabilité du véhicule, il est utile de faire braquer les roues arrière dans le même sens que les roues avant, mais d'un angle α_{ArG(L)} plus faible que l'angle α_{AvG(L)} à l'avant. De façon générale, le contrôleur de trajectoire, pilotant l'angle de braquage sélectivement roue par roue peut, à partir d'au moins un signal délivré par le dispositif de commande (par exemple un signal représentatif de l'angle au volant imposé par le conducteur du véhicule) et tenant compte d'autres paramètres pertinents (comme la vitesse de déplacement longitudinal du véhicule), déterminer la localisation spatiale du centre instantané de rotation idéal pour le véhicule. Ce centre instantané de rotation est identifié par le point Ω. Sur cette base, le contrôleur de trajectoire calcule l'angle de braquage de chacune des roues de façon à ce que le plan de la roue se présente sensiblement perpendiculairement à la ligne reliant le centre de la roue considérée au centre instantané de rotation du véhicule Ω : en reliant le centre instantané de rotation au centre de chacune des roues directrices, on peut calculer l'angle de braquage de chacune des roues de façon à ce que le plan de la roue se présente sensiblement perpendiculairement à la ligne reliant le centre de la roue considérée au centre instantané de rotation du véhicule Ω. Le contrôleur de trajectoire est chargé des programmes adéquats pour effectuer ce calcul. A la dérive des pneus près, le véhicule tourne autour du centre instantané de rotation du véhicule Ω. Le centre instantané de rotation du véhicule Ω est en permanence calculée de façon dynamique, en fonction des conditions de conduite (vitesse du véhicule, vitesse de lacet, ...).

Enfin, la figure 5 illustre le cas d'un changement de trajectoire par déplacement transversal à cap constant. On voit cette fois que toutes les roues braquent du même angle α_{(T)}.

Enfin, l'invention s'étend aussi à un système de direction électrique pour véhicule dont certaines roues seulement sont directrices. Par rapport à la figure 4, la différence est bien entendu que l'angle α_{Ar} est nul à gauche et à droite. Mais ceci ne constitue qu'un cas particulier du système expliqué ci-dessus, dans lequel le contrôleur de trajectoire, pilotant l'angle de braquage sélectivement roue par roue à l'essieu directeur peut, à partir de l'angle au volant imposé par le conducteur du véhicule et tenant compte d'autres paramètres pertinents comme la vitesse de déplacement longitudinal du véhicule, déterminer la localisation spatiale du centre instantané de rotation idéal pour le véhicule (point Ω), cette fois nécessairement localisé sur la droite virtuelle liant le centre des roues arrières. De même, à partir du moment où ce centre instantané de rotation est choisi, en le reliant au centre de chacune des roues directrices, on peut calculer l'angle de braquage de chacune des roues de façon à ce que le plan de la roue se présente sensiblement perpendiculairement à la ligne reliant le centre de la roue considérée au centre instantané de rotation du véhicule Ω. Le contrôleur de trajectoire est chargé des programmes adéquats pour effectuer ce calcul, en permanence, de façon dynamique. A la dérive des pneus près, le véhicule tourne autour du centre instantané de rotation du véhicule Ω.

Dès lors, l'invention propose un système électrique pour agir sur la trajectoire d'un véhicule dont toutes les roues directrices sont commandées par un actionneur électrique qui lui est propre, l'angle de braquage étant imposé individuellement et sélectivement sur chacune des roues directrices par son actionneur électrique, le système comportant un organe de commande pour agir sur la trajectoire du véhicule, ledit organe de commande étant à la disposition du conducteur, comportant un contrôleur de trajectoire déterminant la localisation spatiale du centre instantané de rotation du véhicule en fonction d'au moins un signal délivré par ledit organe de commande et en fonction d'au moins un signal représentatif de la trajectoire effective du véhicule, par exemple la vitesse longitudinale du véhicule, et calculant l'angle de braquage de chacune des roues de façon à ce que le plan de la roue se présente sensiblement perpendiculairement à la ligne reliant le centre de la roue considérée au centre instantané de rotation du véhicule Ω.

## Revendications

1. Dispositif de commande à la disposition du conducteur pour agir sur la trajectoire d'un véhicule dont toutes les roues sont directrices par une double commande agissant séparément sur la mise en lacet et sur le déplacement transversal pur, la transmission des ordres de déplacement se faisant par voie électrique, le dispositif comprenant un premier organe de commande pour imprimer un mouvement de lacet au véhicule, le premier organe comportant essentiellement un arbre rotatif (33) solidaire de deux poignées (32G, 32D) disposées à une certaine distance de l'arbre rotatif, ledit arbre rotatif étant pourvu d'au moins un capteur d'angle de rotation (34) et d'un moyen de rappel en position ligne droite (35), et comportant un second organe pour imprimer au véhicule un déplacement transversal sans lacet.

2. Dispositif selon la revendication 1 dans lequel le second organe comporte au moins un capteur d'effort (40) agencé pour détecter une sollicitation tendant à basculer lesdites poignées autour d'un axe de basculement perpendiculaire à l'arbre rotatif.

3. Dispositif selon la revendication 1 dans lequel le second organe comporte essentiellement une gâchette sensitive sur chaque poignée, actionnant l'une le déplacement transversal dans un sens et l'autre le déplacement transversal dans l'autre sens.

4. Dispositif selon la revendication 1 dans lequel le premier organe a la forme d'un volant au moins partiellement.

## Patentansprüche

1. Steuervorrichtung, die dem Fahrer zur Verfügung steht, um über eine doppelte Steuerung, die getrennt auf die Gierbewegung und auf die reine Querverschiebung einwirkt, auf den Weg eines Fahrzeugs einzuwirken, dessen Räder alle Leiträder sind, wobei die Übertragung der Verschiebungsbefehle auf elektrischem Weg erfolgt, wobei die Vorrichtung ein erstes Steuerorgan aufweist, um dem Fahrzeug eine Gierbewegung zu verleihen, wobei das erste Organ hauptsächlich eine Drehwelle (33) aufweist, die fest mit zwei Griffen (32G, 32D) verbunden ist, die in einer gewissen Entfernung von der Drehwelle angeordnet sind, wobei die Drehwelle mit mindestens einem Drehwinkelsensor (34) und mit einer Einrichtung (35) zum Zurückholen in die geradlinige Position versehen ist, und ein zweites Organ aufweist, um dem Fahrzeug eine Querverschiebung ohne Gieren zu verleihen.

2. Vorrichtung nach Anspruch 1, bei der das zweite Organ mindestens einen Kräftesensor (40) aufweist, der ausgelegt ist, um eine Beanspruchung zu erfassen, die dazu tendiert, die Griffe um eine Kippachse zu kippen, die lotrecht zur Drehwelle liegt.

3. Vorrichtung nach Anspruch 1, bei der das zweite Organ hauptsächlich auf jedem Griff einen empfindlichen Drücker aufweist, von denen einer die Querverschiebung in einer Richtung und der andere die Querverschiebung in der anderen Richtung betätigt.

4. Vorrichtung nach Anspruch 1, bei der das erste Organ zumindest teilweise die Form eines Lenkrads hat.

## Claims

1. Control device available to the driver for altering the direction of a vehicle, all of the wheels of which are steered wheels, by a dual control acting separately on the yawing and on the pure transverse displacement, the displacement instructions being transmitted by electrical means, the device comprising a first control component for applying a yaw movement to the vehicle, the first component essentially comprising a rotary shaft (33) integral with two handles (32G, 32D), which are arranged at a certain distance from the rotary shaft, the said rotary shaft being provided with at least one angle-of-rotation sensor (34) and with a means (35) for returning to a straight-line position, and comprising a second component for applying a yaw-free transverse displacement to the vehicle.

2. Device according to Claim 1, in which the second component comprises at least one force sensor (40) which is designed to detect an action tending to tilt the said handles about a tilting axis perpendicular to the rotary shaft.

3. Device according to Claim 1, in which the second component essentially comprises a sensitive trigger on each handle, one actuating the transverse displacement in one direction and the other actuating the transverse displacement in the other direction.

4. Device according to Claim 1, in which the first component is at least partially in the form of a steering wheel.
